# EUROPEAN PATENT SPECIFICATION

(11) **EP 3 241 788 B1**
(45) Date of publication and mention of the grant of the patent: **26.12.2018**
(21) Application number: 17169827.7
(22) Date of filing: 05.05.2017
(51) Int. Cl.: B65G 47/91, B25J 15/00

(54) **MANIPULATOR TO TRANSFER PANELS OF WOOD OR THE LIKE**
MANIPULATOR ZUM TRANSFER VON PANEELEN AUS HOLZ UND DERGLEICHEN
MANIPULATEUR DE TRANSFERT DE PANNEAUX EN BOIS OU ANALOGUES

(30) Priority: 06.05.2016 IT UA20163215
(43) Date of publication of application: 08.11.2017
(73) Proprietor: BIESSE S.p.A., 61100 Pesaro (IT)
(72) Inventor: TORRACA, Roberto, 61100 PESARO (IT)
(74) Representative: Manconi, Stefano

(56) References cited:
- EP-A1- 0 512 126
- EP-A1- 1 882 652
- US-A- 5 931 279

## Description

The invention relates to a manipulator to transfer panels of wood or the like.

In particular, the invention relates to a manipulator to transfer panels of wood or the like from and/or to a support surface of a work centre for processing the panels.

A manipulator comprises a first slide, which is movable in a first feeding direction, which is parallel to the support surface; a second slide, which is movable in a second feeding direction, which is parallel to the support surface and perpendicular to the first feeding direction; and a third slide, which is movable in a third feeding direction, which is perpendicular to the support surface.

The manipulator comprises, furthermore, at least one support plate, which is mounted on the third slide and is provided with a plurality of sucking pick-and-place members (especially suction cups), which project downwards from the support plate and are configured to be connected to a pneumatic sucking device so as to pick up and hold a panel.

At least one of the pick-and-place members of the manipulator is mounted so as to rotate around a longitudinal axis of its own that is perpendicular to the support surface.

After having been transferred onto the support surface of the work centre, each panel must be correctly positioned in the aforesaid first and second feeding direction in contact with two limit stop devices.

In order to allow the panel to be correctly positioned, the pick-and-place members are deactivated except for the rotary pick-and-place member, and the panel is fed in the aforesaid first and second feeding direction, so as to come into contact with the two limit stop devices and, if necessary, rotate around the longitudinal axis of the rotary pick-and-place member.

Manipulators of the type described above are affected by some drawbacks, which are mainly due to the fact that the correct positioning of the panel in contact with the two limit stop devices causes the panel to rest and rub against the support surface and, therefore, can relatively easily damage the panel.

Furthermore, as the panel is fed on the support surface exclusively by means of the rotary pick-and-place member, known manipulators of the type described above allow users to transfer panels with relatively small sizes and a relatively reduced weight.

A manipulator according to the preamble of claim 1 is disclosed by document US 5 931 279 A.

It is an object of the present invention to provide a manipulator to transfer panels of wood or the like, which is designed to eliminate the aforementioned drawbacks in a straightforward, relatively low-cost manner.

According to the invention, there is provided a manipulator to transfer panels of wood or the like according to the appended claims.

The invention will now be described with reference to the accompanying drawings, which show a non-limiting embodiment thereof, wherein:
figure 1 is a schematic perspective view, with parts removed for greater clarity, of a preferred embodiment of the manipulator according to the invention;
figure 2 shows a schematic plan view, with parts removed for greater clarity, of the manipulator of figure 1;
figure 3 is a schematic perspective view, with parts removed for greater clarity, of a detail of the manipulator of figures 1 and 2; and
figure 4 is a schematic plan view, with parts removed for greater clarity, of the detail of figure 3.

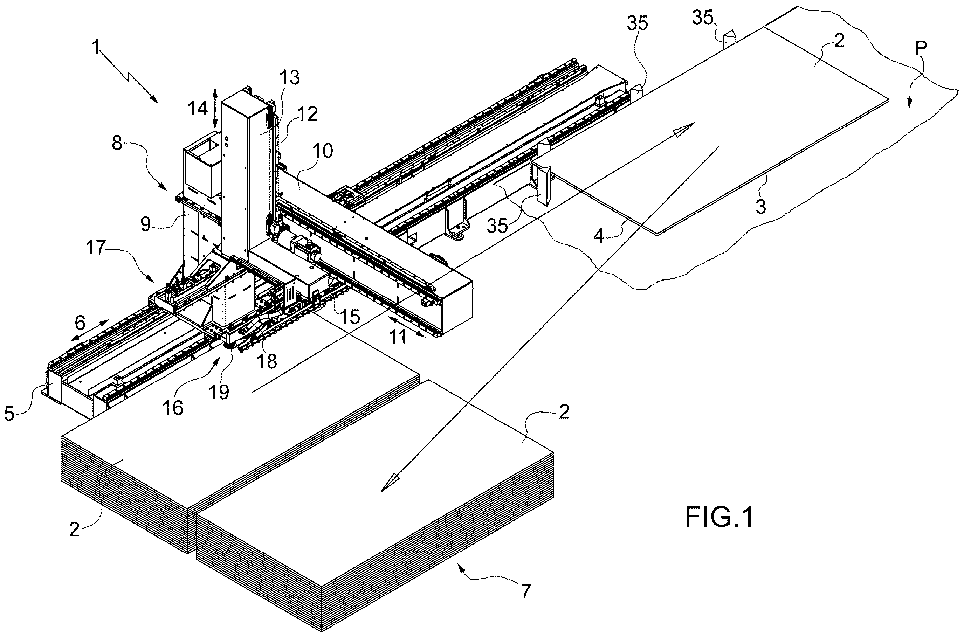

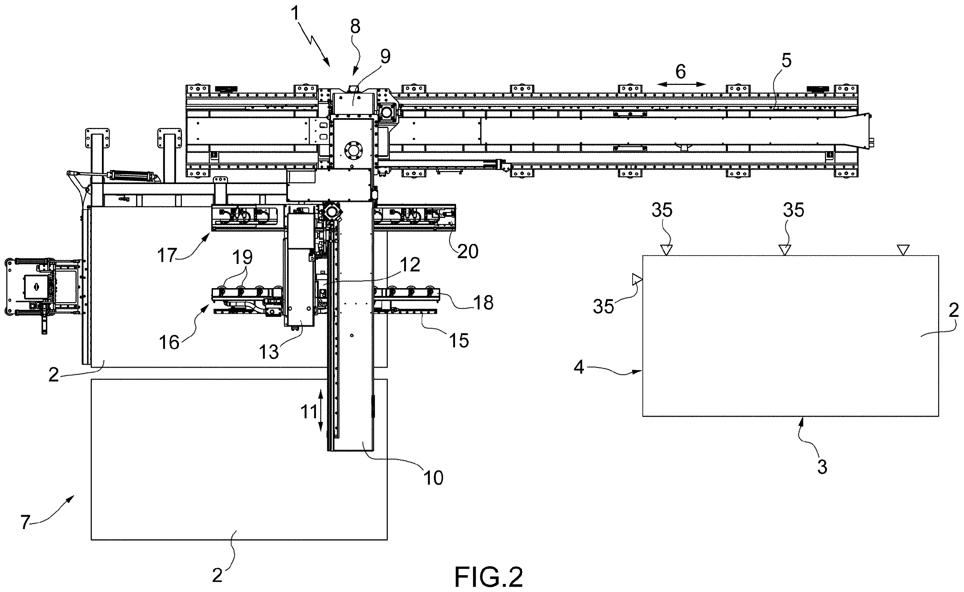

With reference to figures 1 and 2, number 1 indicates, as a whole, a manipulator to transfer wood panels 2 or the like from and/or to a support surface P of a known work centre for processing the panels 2, which is not shown herein.

Each panel 2 has a substantially rectangular shape and is delimited by two side faces 3, which are parallel to one another and by two side faces 4, which are parallel to one anther and perpendicular to the faces 3.

The manipulator 1 comprises a base 5 with an elongated shape, which extends in a horizontal direction 6 between the surface P and a station 7 to pick-up the panels 2 to be processed and release the panels 2 that have just been processed.

The manipulator 1 has, furthermore, an overhead crane 8 comprising a vertical upright 9, which is coupled in a known manner to the base 5 so as to make straight movements along the base 5 in the direction 6, and a horizontal crosspiece 10 extending in a horizontal direction 11, which is transverse to the direction 6.

The manipulator 1 comprises, furthermore, a horizontal slide 12, which is coupled in a known manner to the crosspiece 10 so as to make straight movements along the crosspiece 10 in the direction 11; and a vertical slide 13, which is coupled in a known manner to the slide 12 so as to make, relative to the slide 12, straight movements in a vertical direction 14, which is orthogonal to the directions 6 and 11.

In particular, the slide 13 supports a known pressing device 15 and two pick-and-place units 16, 17, which are aligned with one another and with the pressing device 15 in the direction 11.

The unit 16 is arranged between the pressing device 15 and the unit 17 and comprises a support bar 18, which extends in the direction 6 and is coupled in a known manner to the slide 13 so as to be selectively moved in the direction 11 during an initial set-up phase of the manipulator 1 based on the sizes of the panels 2.

The bar 18 supports a plurality of known pick-and-place members 19 (especially suction cups), which are distributed along the bar 18 in the direction 6, project downwards from the bar 18 in the direction 14 and can be selectively connected to a pneumatic sucking device, which is known and not shown herein, so as to pick up and hold the panels 2.

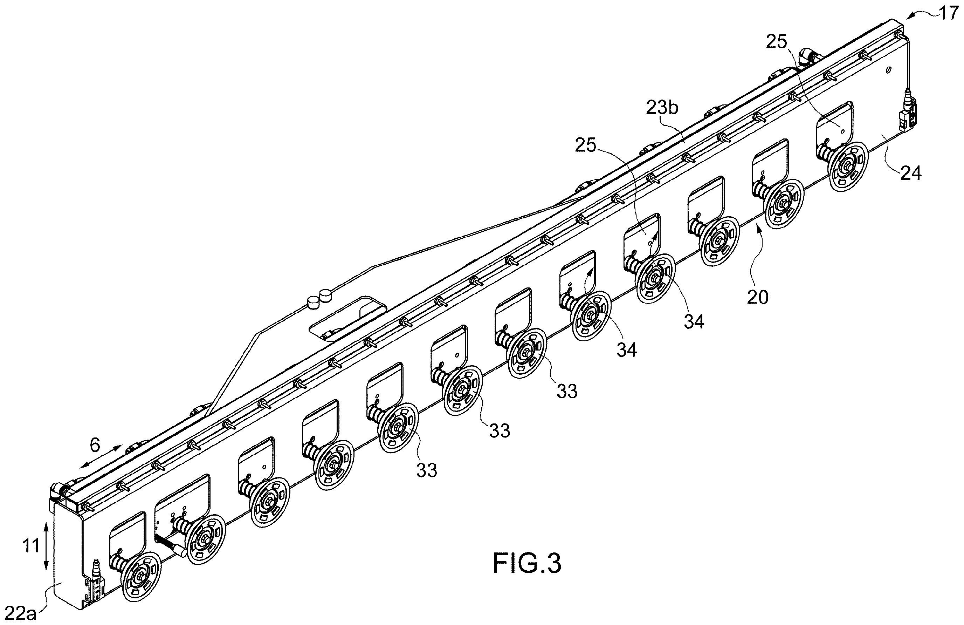

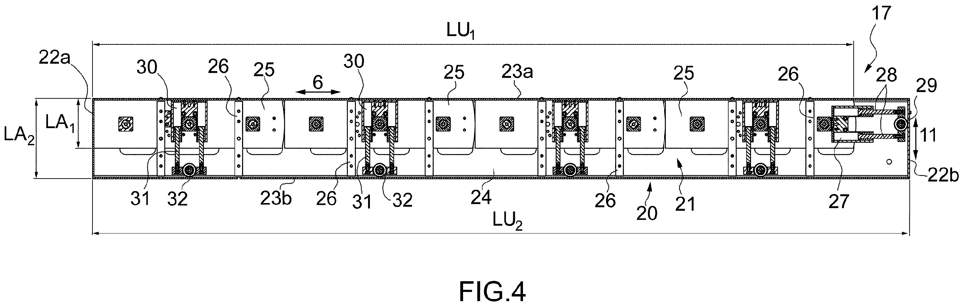

According to figures 3 and 4, the unit 17 comprises a box-like support frame 20, which is fixed to the slide 13, has an elongated shape and extends in the direction 6.

The frame 20 is configured so as to define a track 21, which is delimited - in the direction 6 - by two side walls 22, which are parallel to one another and perpendicular to the direction 6, and - in the direction 11 - by two side walls 23, which are parallel to one another and perpendicular to the walls 22 and to the direction 11.

The track 21 is delimited by a bottom wall 24 perpendicular to the direction 14 and is engaged in a sliding manner, in particular, by four plates 25, which are arranged in contact with the wall 24 and are aligned with one another in the direction 6.

Each plate 25 is kept in contact with the wall 24 by two limit stop bars 26, which extend between the walls 23 in the direction 11 and are arranged at a distance from the wall 24 that is such as to prevent the plate 25 from moving in the direction 14.

The plates 25 have a width LA₁ that, measured parallel to the direction 11, is smaller than the width LA₂ of the track 21, namely than the distance between the walls 23, which is also measured parallel to the direction 11.

The plates 25 have a total length LU₁ that, measured parallel to the direction 6, is smaller than the length LU₂ of the track 21, namely than the distance between the walls 22, which is also measured parallel to the direction 6.

As a consequence, the plates 25 are mounted in the track 21 so as to shift, relative to the frame 20, in the directions 6 and 11 and so as to rotate, relative to the frame 20, around an instantaneous rotation axis, which is parallel to the direction 14 and whose position depends on the position of the plates 25 in the directions 6 and 11.

In other words, the plates 25 are mounted so as to rotate on the wall 24 and, therefore, in a lying plane that is parallel to the directions 6 and 11 and to the surface P.

The plates 25 are moved - and normally kept - in contact with one of the walls 22 (hereinafter indicated with 22a) by a pneumatic shock absorber, which is defined by an actuator cylinder 27, which is fixed to the plate 25 opposite the wall 22a.

The cylinder 27 has an output rod 28, which extends in the direction 6 and cooperates with the wall 22 (hereinafter indicated with 22b) opposite the wall 22a through the interposition of a roller 29, which is mounted on the rod 28 so as to rotate around a longitudinal axis of its own, which is parallel to the direction 14.

Each plate 25 is moved - and normally kept - in contact with one of the walls 23 (hereinafter indicated with 23a) by a pneumatic shock absorber, which is defined by an actuator cylinder 30, which is fixed to the plate 25.

The cylinder 30 has an output rod 31, which extends in the direction 11 and cooperates with the wall 23 (hereinafter indicated with 23b) opposite the wall 23a through the interposition of a roller 32, which is mounted on the rod 31 so as to rotate around a longitudinal axis of its own, which is parallel to the direction 14.

Each plate 25 supports, in particular, three sucking pick-and-place members 33, which can be connected to a known pneumatic sucking device, which is not shown herein, to pick up and hold a panel 2.

Each member 33 (in particular, a suction cup) projects downwards from the relative plate 25 and extends through a slot 34 obtained in the bottom wall 24 of the track 21.

The operation of the manipulator 1 will now be described starting from an instant in which the two pick-and-place units 16, 17 are arranged in the pick-up and release station 7.

After having picked up a panel 2 from a stack of panels 2 to be processed, which is arranged in the station 7, the units 16, 17 are moved on the surface P of the work centre (not shown) by combining the movements of the overhead crane 8 in the direction 6 with the movements of the slide 12 in the direction 11 and of the slide 13 in the direction 14.

Now, the pick-and-place members 19 of the unit 16 are deactivated and the panel 2, which is solely held by the pick-and-place members 33 of the unit 17, is moved so as to reach a position in contact with two known limit stop devices 35, which are mounted on the surface P, and is correctly positioned in the directions 6 and 11.

With reference to what described above, it should be pointed out that:
the cylinders 27 and 30 are configured to keep the plates 25 in contact with the walls 22a and 23a, respectively, with a constant force that, in any case, is smaller than the one exerted upon the panel 2 and, hence, upon the members 33 by the limit stop devices 35 following the movement of the panel 2 against the devices 35; and
the rollers 29 and 32 make it easier for the plates 25 to slide in the directions 6 and 11 when the plates 25 are arranged according to angles other than 0° relative to the directions 6 and 11.

When the panel 2 is correctly positioned on the surface P in contact with the devices 35, the members 33 are deactivated, the panel 2 is released on the surface P, and the plates 24 are moved again by the cylinders 27, 30 so as to reach a position in contact with the walls 22a and 23a, respectively.

Once the processing in the work centre (not shown) has ended, the panel 2 is picked up again by the pick-and-place units 16, 17 and transferred from the surface P to a stack of panels 2 that have just been processed, which is arranged in the pick-up and release station 7.

The manipulator 1 has some advantages, which are mainly due to the fact that the panel 2 is correctly positioned in the directions 6 and 11 in contact with the devices 35 without ever releasing the panel 22 from the members 33 of the unit 17, combining the movements of the plates 25 in the track 21 and, preferably though not necessarily, always keeping the panel 2 at a given distance from the surface P, which means that the panel 2 never rubs against the surface P and, therefore, is prevented from being damaged.

Furthermore, as the panel 2 is picked up and held by a relatively large number of members 33, the manipulator 1 is capable of transferring panels 2 with relatively large sizes and weights.

According to some embodiments that are not shown:
the number of plates 25 is different from four;
the number of pick-and-place members 33 of each plate 25 is different from three;
the pick-and-place unit 16 is eliminated and replaced by a pick-and-place unit that is completely similar to the pick-and-place unit 17;
the plates 25 are arranged according to at least two rows of plates 25, which are parallel and next to one another; and
the plates 25 are kept at a given distance from the walls 22a, 22b and from the walls 23a, 23b by means of shock absorber devices, for example spring or pneumatic shock absorber devices, which are interposed between the plates 25 and the walls 22a, 22b and between the plates 25 and the walls 23a, 23b.

## Claims

1. A manipulator to transfer panels (2) of wood or the like from and/or to a support surface (P) of a work centre for processing the panels (2), the manipulator comprising at least one pick-and-place unit (17) comprising, in turn, a frame (20), which is configured to define a track (21), and at least two pick-and-place members (33), which project downwards from at least one support plate (25) and can be connected to a pneumatic sucking device so as to pick up and hold a panel (2); and a transfer unit (8, 12, 13) to move the pick-and-place unit (17) between the support surface (P) and a pick-up and/or release station (7) for the panel (2); the track (21) having a length (LU₂) that, measured parallel to a first direction (6), is greater than the size (LU₁) of said at least one support plate (25), which is also measured parallel to the first direction (6), and having, furthermore, a width (LA₂) that, measured parallel to a second direction (11) transverse to the first direction (6), is greater than the size (LA₁) of said at least one support plate (25), which is also measured parallel to the second direction (11); and being **characterized in that** said at least one support plate (25) is engaged in the track (21) in a sliding manner so as to move, relative to the frame (20), in said first and second direction (6, 11) and so as to rotate, relative to the frame (20), in a lying plane that is parallel to said first and second direction (6, 11); the track (21) being delimited by a bottom wall (24), which is provided with at least one slot (34), which is engaged by the pick-and-place members (33), so as to allow said at least one support plate (25) to move in said first and second direction (6, 11) and to rotate in the lying plane.

2. A manipulator according to claim 1, wherein each pick-and-place member (33) comprises a suction cup.

3. A manipulator according to claim 1 or 2, wherein the transfer unit (8, 12, 13) comprises a first slide (8), which is movable in a first feeding direction (6), which is parallel to the support surface (P); a second slide (12), which is movable in a second feeding direction (11), which is parallel to the support surface (P) and perpendicular to the first feeding direction (6); and a third slide (13), which is movable in a third feeding direction (14), which is perpendicular to the support surface (P); the frame (20) being mounted on the third slide (13).

4. A manipulator according to any of the previous claims, wherein the track (21) is delimited, in the first direction (6), by a first delimiting wall (22a) and, in the second direction (11), by a second delimiting wall (23a); a first pushing device (27) being provided in order to move - and normally keep - said at least one support plate (25) in contact with the first delimiting wall (22a) and a second pushing device (30) being provided in order to move - and normally keep - said at least one support plate (25) in contact with the second delimiting wall (23a).

5. A manipulator according to claim 4, wherein the track (21) is further delimited by a third delimiting wall (22b), which is parallel to the first delimiting wall (22a), and by a fourth delimiting wall (23b), which is parallel to the second delimiting wall (23a).

6. A manipulator according to claim 5, wherein the first pushing device (27) comprises a first coupling member (29) to be coupled to the third delimiting wall (22b) and the second pushing device (30) comprises a second coupling member (32) to be coupled to the fourth delimiting wall (23b) .

7. A manipulator according to claim 6, wherein each coupling member (29, 32) is a rolling member, which is arranged in contact with the relative delimiting wall (22b, 23b) .

8. A manipulator according to any of the claims from 4 to 7, wherein each pushing device (27, 30) comprises at least one pneumatic actuator cylinder or at least one spring.

9. A manipulator according to any of the previous claims and comprising a plurality of said pick-and-place members (33), which project downwards from at least two support plates (25), which are engaged in the track (21) in a sliding manner; the support plates (25) being aligned with one another in at least one of said first and second direction (6, 11).

10. A manipulator according to claim 9, wherein the pick-and-place members (33) project downwards from a plurality of support plates (25), which are arranged according to at least two rows of support plates (25), which are parallel and next to one another.

11. A manipulator according to claim 9 or 10, wherein the length (LU₂) of the track (21) is greater than the size (LU₁) of the support plates (25) and the width (LA₂) of the track (21) is greater than the size (LA₁) of the support plates (25).

12. A manipulator according to any of the previous claims, wherein the track (21) has at least one limit stop device (26) to prevent the support plates (25) from moving perpendicularly to said lying plane.

## Patentansprüche

1. Manipulator zum Transfer von Paneelen (2) aus Holz oder dergleichen von einer / oder zu einer Tragfläche (P) eines Arbeitszentrums zum Bearbeiten der Paneele (2); der Manipulator umfasst wenigstens eine Aufnahme- und-Platzier- Einheit (17) die ihrerseits einen Rahmen (20) umfasst, der derart gestaltet ist, dass er eine Laufbahn (21) bildet, und wenigstens zwei Aufnahme- und Platzierelemente (33) die von wenigstens einer Tragplatte (25) nach unten ragen und an eine pneumatische Saugeinrichtung angeschlossen werden können, um ein Paneel (2) aufzunehmen und zu halten; eine Transfereinheit (8, 12, 13) zum Bewegen der Aufnahme- und Platzier-einheit (17) zwischen der Tragfläche (P) und einer Aufnahme- und / oder Abgabestation (7) für das Paneel (2); die Laufbahn (21) weist eine Länge (LU₂) auf, die, parallel zu einer ersten Richtung (6), größer als das Maß (LU₁) der wenigstens einen Tragplatte (25) ist, ebenfalls gemessen entlang der ersten Richtung (6), und weiterhin aufweisend eine Breite (LA₂), die in einer zweiten Richtung (11) quer zur ersten Richtung (6) gemessen größer als das Maß (LA₁) der wenigstens einen Tragplatte (25) ist, ebenfalls parallel zur zweiten Richtung (11) gemessen; **dadurch gekennzeichnet, dass** die wenigstens eine Tragplatte (25) mit der Laufbahn (21) gleitend zusammen arbeitet, um sich relativ zum Rahmen (20) in der ersten und der zweiten Richtung (6, 11) bewegt, um sich relativ zum Rahmen (20) in einer liegenden Ebene zu drehen, die parallel zu der ersten und der zweiten Richtung (6, 11) verläuft; die Laufbahn (21) ist durch einen Boden (24) begrenzt, der mit wenigstens einen Schlitz (34) versehen ist, der von den aufnahme- und Platzier-Elementen (33) erfasst wird, um es der wenigstens einen Tragplatte (25) zu erlauben, sich in der ersten und der zweiten Richtung (6, 11) zu bewegen und sich in der liegenden Ebene zu drehen.

2. Manipulator gemäß Anspruch 1, wobei jedes Aufnahme- und- Platzier-Element (33) einen Saugnapf umfasst.

3. Manipulator gemäß Anspruch 1 oder 2, wobei die Transfereinheit (8, 12, 13) einen ersten Schlitten (8) erfasst, der in einer ersten Zufuhrrichtung (6) beweglich ist, die parallel zur Tragfläche (P) verläuft; einen zweiten Schlitten (12) der in einer zweiten Zufuhrrichtung (11) beweglich ist, die parallel zur Tragfläche (P) verläuft sowie senkrecht zur ersten Zufuhrrichtung (6), und einen dritten Schlitten (13), der beweglich ist in eine dritten Zufuhrrichtung (14) die senkrecht zur Tragfläche (P) verläuft; der Rahmen (20) ist am dritten Schlitten (13) montiert.

4. Manipulator nach einem der vorausgegangenen Ansprüchen, wobei die Laufbahn (21) in der ersten Richtung (6) durch eine erste Begrenzungswand (22a) begrenzt ist, und in der zweiten Richtung (11) durch eine zweite Begrenzungswand (23a); einen ersten Schieber (27), vorgesehen zum Bewegen und normalen Halten der wenigstens einen Tragplatte (25) in Berührung mit der ersten Begrenzungswand (22a), und einen zweiten Schieber (30), vorgesehen zum Bewegen und normal Halten die Tragplatte (25) in Kontakt mit der zweiten Begrenzungswand (23a).

5. Manipulator nach Anspruch 4, wobei die Laufbahn (21) weiterhin begrenzt ist durch eine dritte Begrenzungswand (22b), die parallel zur ersten Begrenzungswand (22a) verläuft, sowie durch eine vierte Begrenzungswand (23b), die parallel zur weiten Begrenzungswand (23a) verläuft.

6. Manipulator gemäß Anspruch 5, wobei der erste Schieber (27) eine erste Kupplung (29) aufweist, die an die dritte Begrenzungswand (22b) angekoppelt wird, wobei der zweite Schieber (30) eine zweite Kupplung (32) aufweist, die an die vierte Begrenzungswand (23b) angekoppelt wird.

7. Manipulator gemäß Anspruch 6, wobei jede Kupplung (29, 32) ein rollendes Element ist, in Kontakt mit der betreffenden Begrenzungswand (22b, 23b).

8. Manipulator gemäß einen der Ansprüche 4 bis 7, wobei jeder Schieber (27, 30) wenigstens einen pneumatischen Aktuatorzylinder oder wenigstens eine Feder umfasst.

9. Manipulator gemäß einen der vorausgegangenen Ansprüchen, umfassend eine Mehrzahl von Aufnahme- und- Platzier- Elementen (33) die von wenigstens zwei Tragplatten (25) nach unten ragen und die von der Laufbahn (21) gleitend erfasst werden; die Tragplatten (25) sind miteinander ausgerichtet in wenigstens einer der beiden Richtungen (6, 11).

10. Manipulator gemäß Anspruch 9, wobei die Aufnahme- und- PlatzierElemente (33) von einer Mehrzahl von Tragplatten (25) nach unten ragen, die gemäß wenigstens zwei Reihen von Tragplatten (25) angeordnet sind, die ihrerseits parallel zueinander und naher beieinander angeordnet sind.

11. Manipulator gemäß Anspruch 9 oder 10, wobei die Längen (LU₂) der Laufbahn (21) größer als das Maß (LU₁) der Tragplatten (25) ist und die Breite (LA₂) der Laufbahn (21) größer als das Maß (LA₂) der Tragplatten (25) ist.

12. Manipulator gemäß einen der vorausgegangenen Ansprüche, wobei die Laufbahn (21) wenigstens einen Begrenzungsanschlag (26) aufweist, um die Tragplatten (25) daran zu hindern, sich senkrecht zu der liegenden Ebene zu bewegen.

## Revendications

1. Manipulateur de transfert de panneaux (2) en bois ou analogues de et/ou vers une surface de support (P) d'un poste de travail pour le traitement des panneaux (2), le manipulateur comprenant au moins une unité de mise en place (17) comprenant, à son tour, un cadre (20), qui est configuré pour définir une piste (21), et au moins deux éléments de mise en place (33), qui font saillie vers le bas à partir d'au moins une plaque de support (25) et peuvent être connectés à un dispositif d'aspiration pneumatique de façon à saisir et à maintenir un panneau (2) ; et une unité de transfert (8, 12, 13) pour déplacer l'unité de mise en place (17) entre la surface de support (P) et une station de saisie et/ou de libération (7) pour le panneau (2) ; la piste (21) ayant une longueur (LU₂) qui, mesurée parallèlement à une première direction (6), est supérieure à la taille (LU₁) de ladite au moins une plaque de support (25), qui est également mesurée parallèlement à la première direction (6), et ayant, de plus, une largeur (LA₂) qui, mesurée parallèlement à une seconde direction (11) transversale à la première direction (6), est supérieure à la taille (LA₁) de ladite au moins une plaque de support (25), qui est également mesurée parallèlement à la seconde direction (11) ; et étant **caractérisé en ce que** ladite au moins une plaque de support (25) est en prise dans la piste (21) d'une manière coulissante de façon à se déplacer, par rapport au cadre (20), dans ladite première et seconde direction (6, 11) et de façon à tourner, par rapport au cadre (20), dans un plan de couchage qui est parallèle à ladite première et seconde direction (6, 11) ; la piste (21) étant délimitée par une paroi inférieure (24), qui est dotée d'au moins une fente (34), qui est mise en prise par les éléments de mise en place (33), de façon à permettre à ladite au moins une plaque de support (25) de se déplacer dans ladite première et seconde direction (6, 11) et de tourner dans le plan de couchage.

2. Manipulateur selon la revendication 1, dans lequel chaque élément de mise en place (33) comprend une ventouse.

3. Manipulateur selon la revendication 1 ou 2, dans lequel l'unité de transfert (8, 12, 13) comprend un premier coulisseau (8), qui est mobile dans une première direction d'alimentation (6), qui est parallèle à la surface de support (P) ; un deuxième coulisseau (12), qui est mobile dans une deuxième direction d'alimentation (11), qui est parallèle à la surface de support (P) et perpendiculaire à la première direction d'alimentation (6) ; et un troisième coulisseau (13), qui est mobile dans une troisième direction d'alimentation (14), qui est perpendiculaire à la surface de support (P) ; le cadre (20) étant monté sur le troisième coulisseau (13).

4. Manipulateur selon l'une quelconque des revendications précédentes, dans lequel la piste (21) est délimitée, dans la première direction (6), par une première paroi de délimitation (22a) et, dans la deuxième direction (11), par une deuxième paroi de délimitation (23a) ; un premier dispositif de poussée (27) étant prévu afin de déplacer - et normalement garder - ladite au moins une plaque de support (25) en contact avec la première paroi de délimitation (22a) et un second dispositif de poussée (30) étant prévu afin de déplacer - et normalement garder - ladite au moins une plaque de support (25) en contact avec la deuxième paroi de délimitation (23a).

5. Manipulateur selon la revendication 4, dans lequel la piste (21) est en outre délimitée par une troisième paroi de délimitation (22b), qui est parallèle à la première paroi de délimitation (22a), et par une quatrième paroi de délimitation (23b), qui est parallèle à la deuxième paroi de délimitation (23a).

6. Manipulateur selon la revendication 5, dans lequel le premier dispositif de poussée (27) comprend un premier élément de couplage (29) devant être couplé à la troisième paroi de délimitation (22b) et le second dispositif de poussée (30) comprend un second élément de couplage (32) devant être couplé à la quatrième paroi de délimitation (23b).

7. Manipulateur selon la revendication 6, dans lequel chaque élément de couplage (29, 32) est un élément de roulement, qui est agencé en contact avec la paroi de délimitation relative (22b, 23b).

8. Manipulateur selon l'une quelconque des revendications 4 à 7, dans lequel chaque dispositif de poussée (27, 30) comprend au moins un cylindre actionneur pneumatique ou au moins un ressort.

9. Manipulateur selon l'une quelconque des revendications précédentes et comprenant une pluralité desdits éléments de mise en place (33), qui font saillie vers le bas à partir d'au moins deux plaques de support (25), qui sont en prise dans la piste (21) d'une manière coulissante ; les plaques de support (25) étant alignées les unes avec les autres dans au moins une de ladite première et seconde direction (6, 11).

10. Manipulateur selon la revendication 9, dans lequel les éléments de mise en place (33) font saillie vers le bas à partir d'une pluralité de plaques de support (25), qui sont agencées selon au moins deux rangées de plaques de support (25), qui sont parallèles et adjacentes les unes aux autres.

11. Manipulateur selon la revendication 9 ou 10, dans lequel la longueur (LU₂) de la piste (21) est supérieure à la taille (LU₁) des plaques de support (25) et la largeur (LA₂) de la piste (21) est supérieure à la taille (LA₁) des plaques de support (25) .

12. Manipulateur selon l'une quelconque des revendications précédentes, dans lequel la piste (21) a au moins un dispositif de butée de limite (26) pour empêcher les plaques de support (25) de se déplacer perpendiculairement audit plan de couchage.
